# EUROPEAN PATENT SPECIFICATION

(11) **EP 1 847 070 B1**
(45) Date of publication and mention of the grant of the patent: **28.08.2013**
(21) Application number: 06715867.5
(22) Date of filing: 06.02.2006
(51) Int. Cl.: H04L 12/28, H04L 1/18

(54) **METHOD AND APPARATUS FOR DETERMINING ACK FRAME TO ACKNOWLEDGE RECEIPT OF A TRANSMISSION FRAME ON A WLAN**
VERFAHREN UND GERÄT ZUR BESTIMMUNG DES ACK-RAHMES ZUR EMPFANGSBESTÄTIGUNG EINES SENDERAHMENS IN EINEM WLAN
PROCEDE ET APPAREIL SERVANT A DETERMINER UNE TRAME ACK COMME ACCUSE DE RECEPTION D'UNE TRAME DE TRANSMISSION SUR UN RESEAU WLAN

(30) Priority: 07.02.2005 US 650174 P; 25.02.2005 KR 20050016180
(43) Date of publication of application: 24.10.2007
(73) Proprietor: Samsung Electronics Co., Ltd., Suwon-si, Gyeonggi-do, 443-742 (KR)
(72) Inventor: KWON, Chang-Yeul,, Gyeonggi-do 446-567 (KR); YANG, Chil-Youl,, Gyeonggi-do 448-120 (KR); LEE, Ho-Seok,, Gyeonggi-do 431-080 (KR)
(74) Representative: Walaski, Jan Filip
(86) International application number: PCT/KR2006/000415
(87) International publication number: WO 2006/083136

(56) References cited:
- EP-A2- 0 797 332
- JP-A- 11 074 886
- JP-A- 2003 087 856
- US-A1- 2005 002 355

## Description

### Technical Field

Apparatuses and methods consistent with the present invention relate to a wireless local area network (WLAN), and more particularly, to determining an acknowledgement (ACK) frame to acknowledge the receipt of a transmission frame on a WLAN.

### Background Art

In wireless local area network (WLAN) environments, a medium access control (MAC) protocol of a carrier sense multiple access/collision avoidance (CSMA/CA) mechanism is used. The CSMA/CA mechanism is designed to avoid collisions by transmitting a signal when there is no data transmission through a cable of a network and sending data only after it is confirmed that the signal is transmitted without collisions.

The CSMA/CA mechanism works as follows: a terminal attempts to sense a carrier indicating that another terminal is already transmitting data and, if the carrier is sensed, the terminal waits for a random period of time. After the random period of time, the terminal attempts to sense the carrier again. If no other carriers are sensed, the terminal starts to send data.

In the CSMA/CA mechanism, carrier sensing is performed using both a physical carrier sensing method and a virtual carrier sensing method. The physical carrier sensing method is performed at a physical layer (PHY), which senses whether a received power exceeds a predetermined threshold and informs a MAC layer whether a medium is 'busy' or 'idle' based on the sensing result.

In the virtual carrier sensing method, if a MAC protocol data unit (MPDU) can be accurately extracted from a received physical layer convergence protocol (PLCP) protocol data unit (PPDU), a 'Duration/ID' field, which is one of a plurality of header fields of the MPDU, is interpreted. If the result of an interpretation indicates that a medium is 'busy', the medium is regarded as 'busy' for a period of time that the medium is expected to be used. As described above, whether or not a medium is 'busy' is determined using the two carrier sensing methods, and the medium is not accessed if busy.

A MAX protocol data unit (MPDU)/PHY service data unit (PSDU) received must be interpreted normally to effectively apply the virtual carrier sensing method to the CSMA/CA mechanism. In other words, for the virtual carrier sensing method, a value of a MAC header must be read normally. If errors occur due to an unstable channel when data is transmitted at a high transmission data rate, or if a receiving station cannot handle the high transmission data rate, the MPDU/PSDU cannot be interpreted. In this situation, virtual carrier sensing is not possible and thus, the CSMA/CA mechan ism is ineffective.

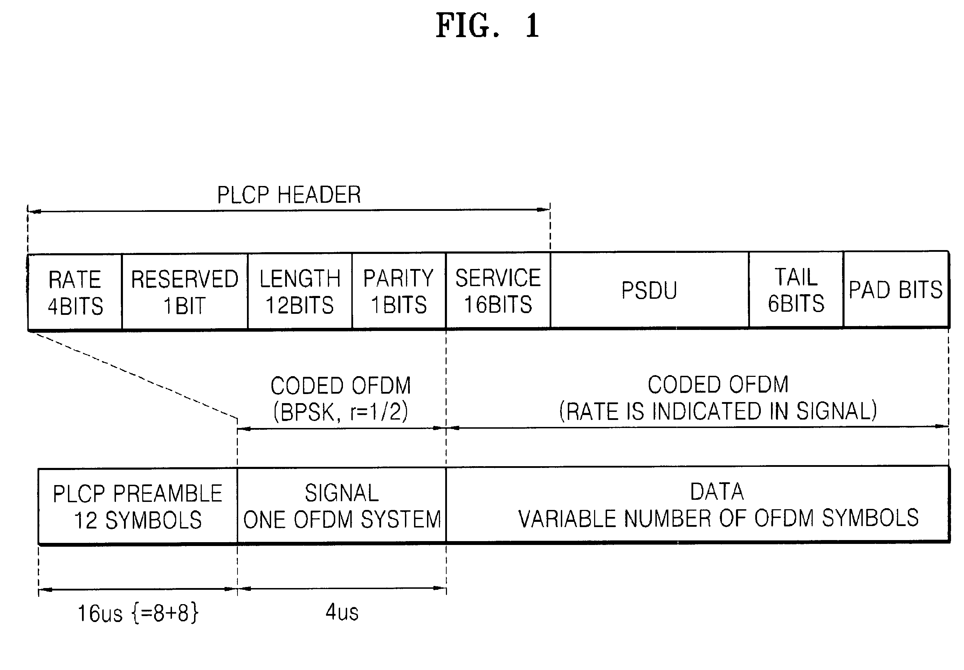

FIG. 1 illustrates an IEEE 802.11a-based legacy PPDU frame format. Referring to FIG. 1, if preamble and signal fields in the PPDU frame format are received normally, duration information of a data field can be estimated using rate and length information included in the signal field. Hence, to receive the preamble and signal fields normally is useful for a clear channel assessment (CCA) mechanism.

If the preamble and signal fields in the received PPDU frame are interpreted but a frame check sequence (FCS) error occurs at a receiving station, a MAC layer controls the receiving station to wait for an extended interframe space (EIFS, 94 µs in the case of IEEE 802.11a), not a distributed coordination function (DCF) interframe space (DIFS), 34 µs in the case of IEEE 802.11a, and backs off.

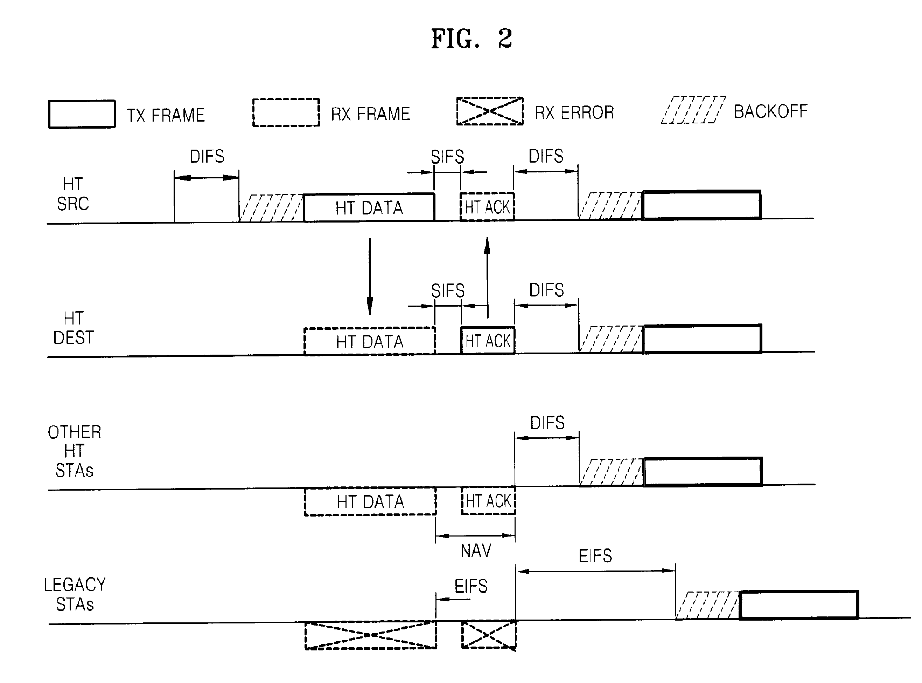

FIG. 2 illustrates data and ACK frame transmissions on a WLAN where high throughput (HT) stations and legacy stations coexist. If HT stations and legacy stations (802.1 1a/b/g) coexist in a basic service set (BSS), the legacy stations cannot interpret an HT frame. Thus, the MAC layers respectively included in the legacy stations fail to accurately carry out virtual carrier sensing and rely only on physical carrier sensing.

Even if the preamble and signal fields of an HT PPDU frame are formatted such that the legacy stations can interpret them, the legacy stations cannot accurately interpret the data field. Thus, the legacy stations have the FCS error and regard the HT PPDU frame as a flawed frame. Then, the MAC layers control the respective legacy stations to apply the EIFS (Extended Inter Frame Space). On the other hand, stations that can handle a high transmission rate, i.e., the HT stations, carry out accurate virtual carrier sensing and normally applies the DIFS.

Since extended interframe space (EIFS)= short interframe space (SIFS) + HT ACK (at the lowest data rate)+DCF interframe space (DIFS), stations that cannot handle the data rate, i.e., the legacy stations with lower transmission capabilities than the HT stations, are given lower medium access priorities than the HT stations. As a result, medium access fairness for all stations, which is maintained by a DCF, cannot be secured.

According to an IEEE 802.11 standard, a control response frame, such as an ACK frame or a clear to send (CTS) frame, must be transmitted at the same transmission rate as that of a previously transmitted frame. However, unlike the frame of the legacy stations, HT frame has an additional frame, since the HT stations have two or more antennas. In addition, an overhead of a PPDU frame increases due to an additional HT signal field. Thus, in the case of a small frame such as the ACK frame, the HT PPDU frame has lower throughput efficiency than the legacy PPDU frame. EP 0797332 A2 discloses a packet data transmission system used to link remote data-gathering units to a central computer.

### Disclosure of Invention

### Technical Solution

The present invention provides a method of determining an ACK frame appropriate for a WLAN environment where HT stations and legacy stations with different data transmission capabilities coexist to acknowledge the receipt of a transmission frame, thereby enabling each station to access a medium in the WLAN environment, complementing a carrier sensing method, and enhancing throughput efficiency by reducing an overhead of an HT PPDU.

### Advantageous Effects

When using a method and apparatus for determining an ACK frame to acknowledge the receipt of a transmission frame on a wireless LAN according to the present invention, each station can perform accurate carrier sensing in a WLAN environment where HT stations and legacy stations coexist. As a result, medium access fairness can be secured. In addition, throughput efficiency can be enhanced by reducing the overhead of an HT PPDU frame.

### Description of Drawings

The above and other aspects of the present invention will become more apparent by describing in detail exemplary embodiments thereof with reference to the attached drawings in which:

FIG. 1 illustrates an IEEE 802.11a-based legacy PPDU frame format;

FIG. 2 illustrates data and ACK frame transmissions on a WLAN where HT stations and legacy stations coexist;

FIG. 3 illustrates an HT PPDU frame format according to the present invention;

FIG. 4 illustrates data and ACK frame transmissions on a WLAN where HT stations and legacy stations coexist according to the present invention;

FIG. 5A illustrates a schematic configuration of an infrastructure basic service set (BSS) including an AP;

FIG. 5B illustrates a schematic configuration of an independent BSS (IBSS) without an AP;

FIG. 6 is a flowchart illustrating a method of determining an ACK frame for acknowledging the receipt of a transmission frame in the infrastructure BSS where HT stations and legacy stations coexist according to an exemplary embodiment of the present invention;

FIG. 7 is a flowchart illustrating a method of determining an ACK frame for acknowledging the receipt of a transmission frame in the IBSS where HT stations and legacy stations coexist according to an exemplary embodiment of the present invention;

FIG. 8 is a detailed flowchart illustrating a method of determining an ACK frame for acknowledging the receipt of a transmission frame by determining the types of stations on the WLAN where HT stations and legacy stations coexist according to the present invention;

FIG. 9 illustrates an example of performance information that a legacy station reports when associating itself with the infrastructure BSS or joining the IBSS;

FIGS. 10A and 10B illustrate examples of performance information that an HT station reports when associating itself with the infrastructure BSS or joining the TBSS;

FIG. 11. illustrates information of an ACK frame to be notified to a corresponding station on the WLAN via a beacon or a probe response;

FIG. 12 is a schematic block diagram of an infrastructure BSS according to the present invention; and

FIG. 13 is a schematic block diagram of an IBSS according to the present invention.

### Best Mode

According to an aspect of the present invention, there is provided a method of determining an ACK frame for acknowledging receipt of a transmission frame on a WLAN according to claim 1, an access point of a basic service set according to claim 18, and an independent basic service set management station of an independent basic service set according to claim 19. According to an aspect of the present invention, there is provided a method of determining an ACK frame for acknowledging receipt of a transmission frame on a WLAN where HT stations and legacy stations with different data transmission capabilities coexist. The method includes: determining types of stations on the WLAN; determining the ACK frame for acknowledging the receipt of the transmission frame on the WLAN according to the determined types of stations; and notifying the corresponding stations on the WLAN of determined ACK frame.

According to another aspect of the present invention, there is provided an access point (AP) in a basic service set (BSS) where HT stations and legacy stations with different data transmission capabilities coexist. The AP includes: a determining unit determining types of stations in the BSS; an ACK frame selecting unit determining an ACK frame for acknowledging the receipt of a transmission frame in the BSS according to the determined types of stations; and an ACK frame type notifying unit notifying a corresponding station of the ACK frame determined by the ACK frame selecting unit.

According to another aspect of the present invention, there is provided an independent basic service set (IBSS) management station in an IBSS where HT stations and legacy stations with different data transmission capabilities coexist. The management station includes: a determining unit determining types of stations in the IBSS; an ACK frame selecting unit determining an ACK frame for acknowledging the receipt of a transmission frame in the IBSS according to the determined types of stations; and an ACK frame type notifying unit notifying a corresponding station of the ACK frame determined by the ACK frame selecting unit.

According to another aspect of the present invention, there is provided an infrastructure BSS where HT stations and legacy stations with different data transmission capabilities coexist. The infrastructure BSS includes: an AP including a determining unit determining types of stations in the infrastructure BSS, an ACK frame selecting unit determining an ACK frame for acknowledging the receipt of a transmission frame in the infrastructure BSS according to the determined types of stations, and an ACK frame type notifying unit notifying a corresponding station of the ACK frame determined by the ACK frame selecting unit; and the stations respectively comprising a unit for reporting performance information of the HT stations and the legacy stations to the AP and a unit for receiving the ACK frame from the ACK frame type notifying unit included in the AP.

According to another aspect of the present invention, there is provided an IBSS where HT stations and legacy stations with different data transmission capabilities coexist. The IBSS includes: an IBSS management station including a determining unit determining types of stations in the IBSS, an ACK frame selecting unit determining an ACK frame for acknowledging the receipt of a transmission frame in the IBSS according to the determined types of stations, and an ACK frame type notifying unit notifying a corresponding station of the ACK frame determined by the ACK frame selecting unit; and the stations respectively comprising a unit for reporting performance information of the HT stations and the legacy stations to the IBSS management station and a unit for receiving the ACK frame from the ACK frame type notifying unit included in the IBSS management station.

### Mode for Invention

The present invention will now be described more fully with reference to the accompanying drawings, in which exemplary embodiments of the invention are shown. The invention may, however, be embodied in many different forms and should not be construed as being limited to the exemplary embodiments set forth therein; rather, these exemplary embodiments are provided so that this disclosure will be thorough and complete, and will fully convey the concept of the invention to those skilled in the art.

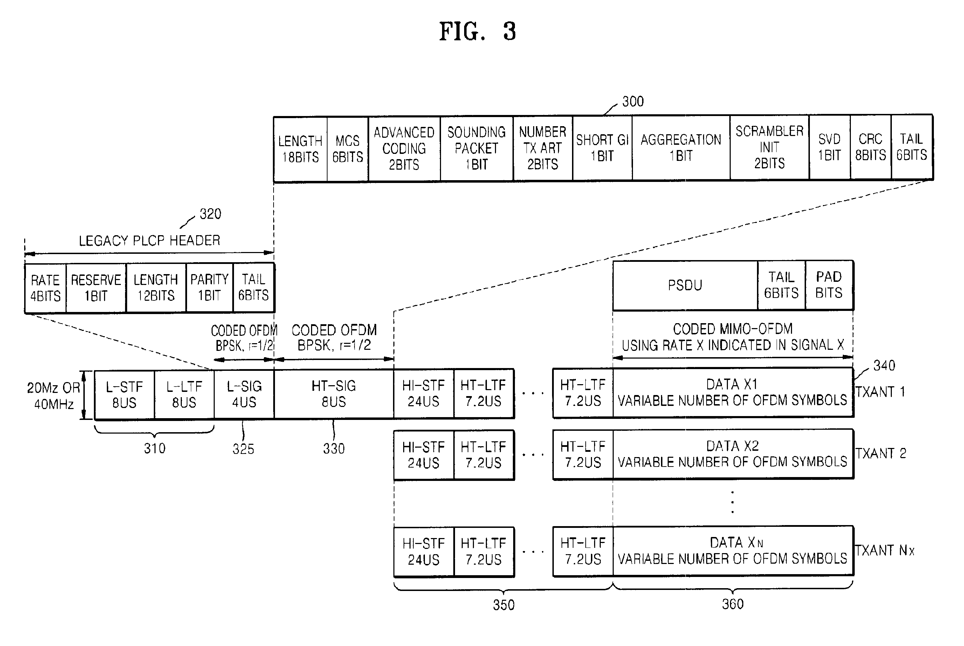

FIG. 3 illustrates a format of an HT physical PPDU frame 300. A preamble field 310 and a legacy PLCP header 320 are placed at the front of the HT PPDU frame 300 such that legacy stations can understand the formats of the signal fields in the HT PPDU frame 300. The legacy PLCP header 320 is followed by an HT signal field 330 and a data field 340. PLCP preamble 350 and data fields 360 for antennas after a second antenna are placed after the signal fields 330, respectively.

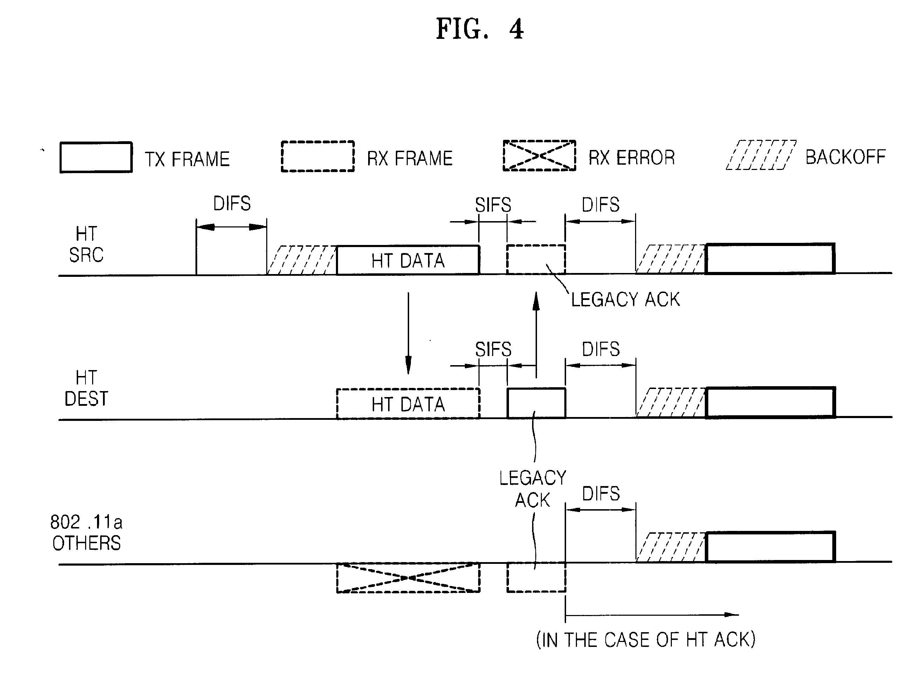

FIG. 4 illustrates data and ACK frame transmissions on a WLAN where HT stations and legacy stations coexist according to the present invention.

An HT transmitting station HT SRC transmits data to an HT receiving station HT DEST using the HT PPDU frame format illustrated in FIG. 3. Then, the HT transmitting station HT SRC and the HT receiving station HT DEST wait for a short interframe space (SIFS). After the SIFS, the HT receiving station HT DEST transmits an ACK frame in a legacy format to the HT transmitting station HT SRC to confirm the receipt of data.

When the HT transmitting station transmits the ACK frame in the legacy format, other legacy stations as well as the HT receiving station interpret the data field normally. Thus, all stations wait for a DCF interframe space (DIFS). Consequently, all stations can compete for medium access on an equal footing.

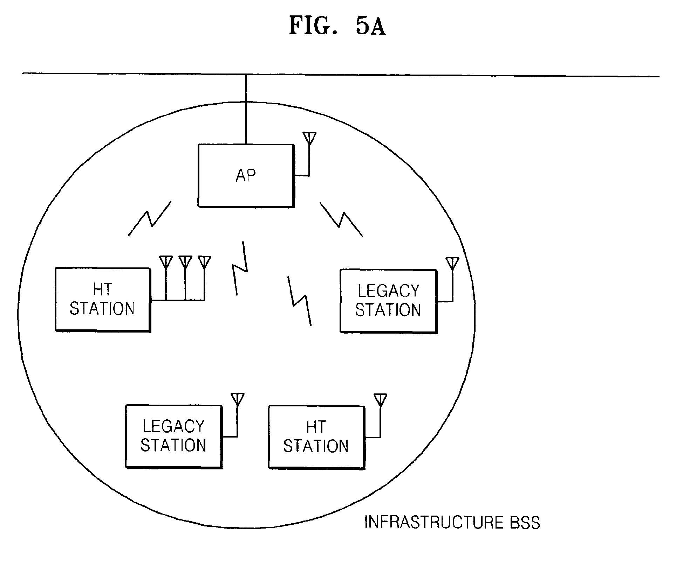

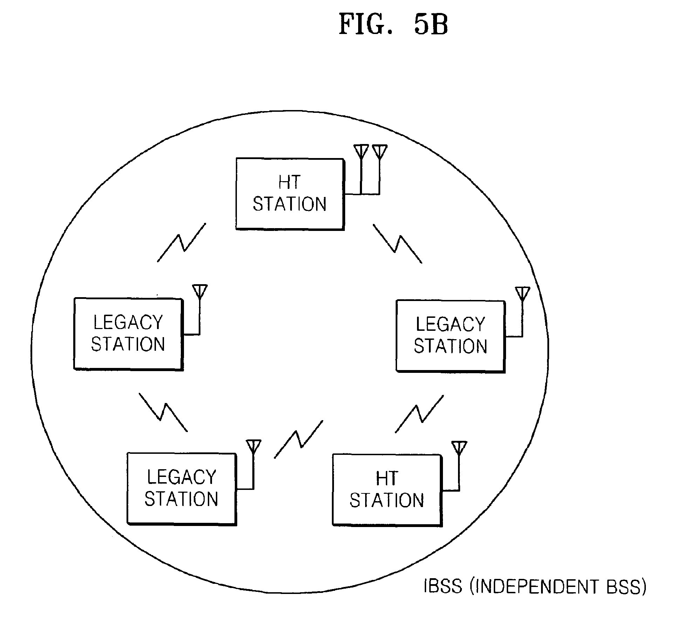

FIG. 5A illustrates a schematic configuration of an infrastructure basic service set (BSS) including an access point (AP). FIG. 5B illustrates a schematic configuration of an independent BSS (IBSS) without an AP.

Referring to FIG. 5A, the infrastructure BSS includes an HT station having three antennas, an HT station having one antenna, two legacy stations, and the AP. The number of stations and the number of antennas that an HT station has in FIG. 5A varies depending on situations.

Referring to FIG. 5B, the IBSS includes an HT station having two antennas, an HT station having one antenna, and three legacy stations. Likewise, the number of stations and the number of antennas that an HT station has in FIG. 5B varies depending on situations.

The HT stations illustrated in FIGS. 5A and 5B include systems that use a multiple input multiple output (MIMO) technology or systems that use channel bonding. The legacy stations include systems that comply with one of the IEEE 802.11 a/b/g standards.

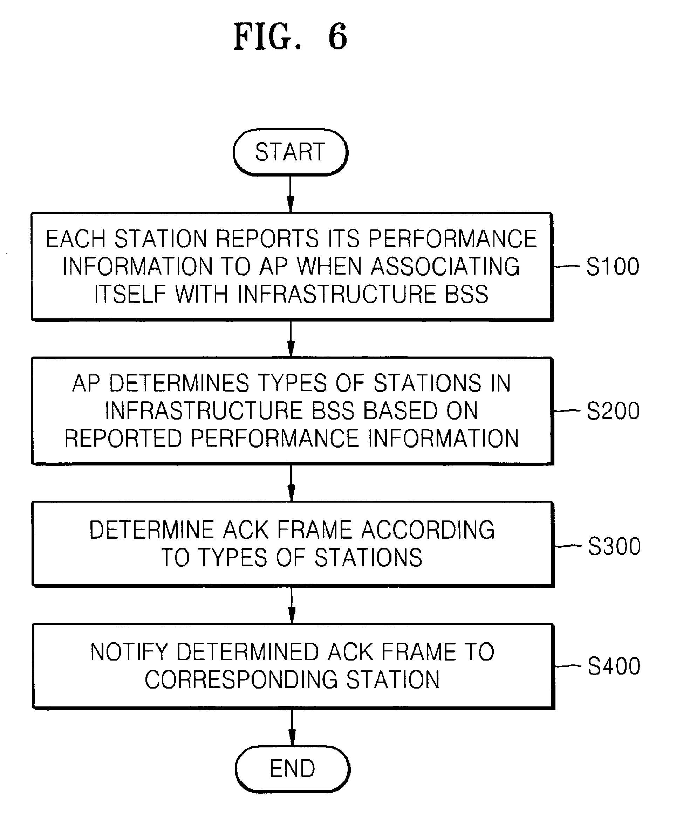

FIG. 6 is a flowchart illustrating a method of determining an ACK frame for acknowledging the receipt of a transmission frame in an infrastructure BSS where HT stations and legacy stations coexist according to an exemplary embodiment of the present invention.

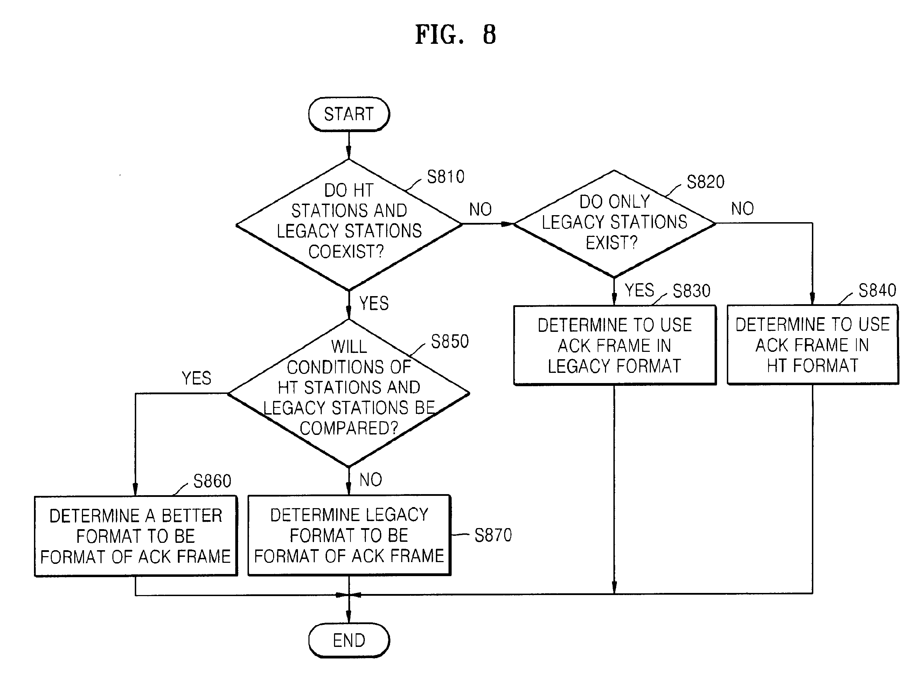

To determine an ACK frame for acknowledging the receipt of a transmission frame, each station reports its performance information to an AP when associating itself with the infrastructure BSS (S100). Based on the reported performance information of each station, the AP determines the types of stations included in the infrastructure BSS (S200). Then, the AP determines an ACK frame for acknowledging the receipt of a transmission frame according to the determined types of stations included in the infrastructure BSS (S300). The method of determining the ACK frame according to the type of station will be described in detail later with reference to FIG. 8.

The AP notifies a corresponding station of the determined ACK frame (S400). The AP notifies of the determined ACK frame via a beacon. Alternatively, if other stations request information regarding the determined ACK frame, the AP notifies of the determined ACK frame via a probe response.

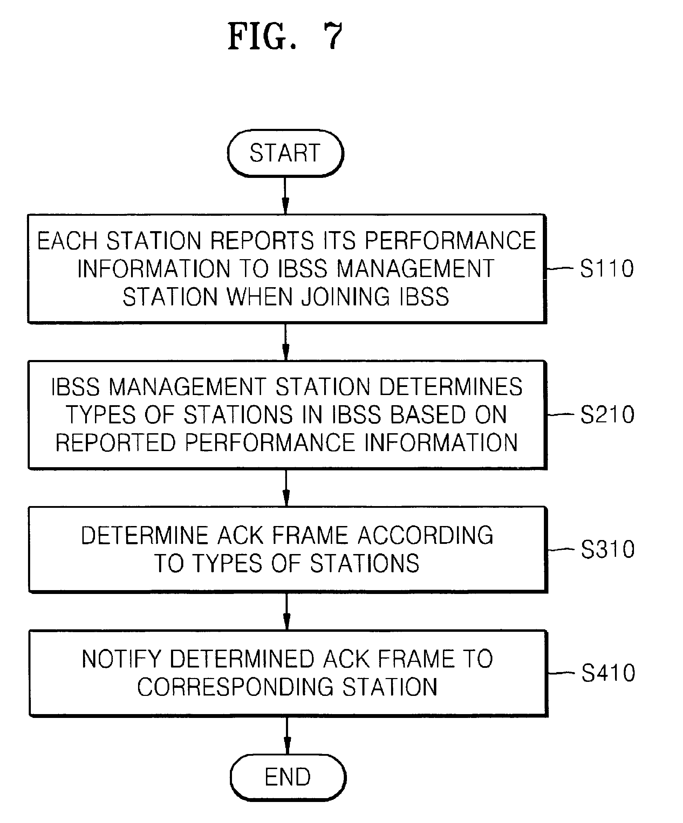

FIG. 7 is a flowchart illustrating a method of determining an ACK frame for acknowledging the receipt of a transmission frame in an IBSS where HT stations and legacy stations coexist according to an exemplary embodiment of the present invention.

To determine an ACK frame for acknowledging the receipt of a transmission frame, each station reports its performance information to an IBSS management station when joining the IBSS (S 110). Based on the reported performance information of each station, the IBSS management station determines the types of stations included in the IBSS (S210). Then, the IBSS management station determines an ACK frame for acknowledging the receipt of a transmission frame according to the type of station (S310). The method of determining the ACK frame according to the type of station will be described in detail later with reference to FIG. 8.

The IBSS management station notifies a corresponding station of the determined ACK frame via a beacon or a probe response if other stations request information regarding the determined ACK frame (S410).

FIG. 8 is a detailed flowchart illustrating a method of determining an ACK frame for acknowledging the receipt of a transmission frame by determining the types of stations on a WLAN where HT stations and legacy stations coexist according to the present invention. The method is equally applied to the infrastructure BSS and the IBSS.

It is determined whether HT stations and legacy stations coexist (S810). If it is determined that the HT stations and the legacy stations do not coexist, it is determined whether only the legacy stations exist (S820).

If it is determined that only the legacy stations exist, a legacy format is designated as the format of an ACK frame for acknowledging the receipt of a transmission frame (S830). If only the HT stations exist, an HT format is designated as the format of the ACK frame for acknowledging the receipt of the transmission frame (S840).

Returning to operation S810, if it is determined that the HT stations and the legacy stations coexist, it is determined whether to compare conditions of the HT stations with those of the legacy stations (S850). If it is determined that the conditions of the HT stations and the legacy stations are to be compared, the HT format and the legacy format are compared and the best format is chosen to be the format of the ACK frame for acknowledging the receipt of the transmission frame (S860). If it is determined that the conditions of the HT stations and the legacy stations are not to be compared, the legacy format is designated as the format of the ACK frame for acknowledging the receipt of the transmission frame (S870).

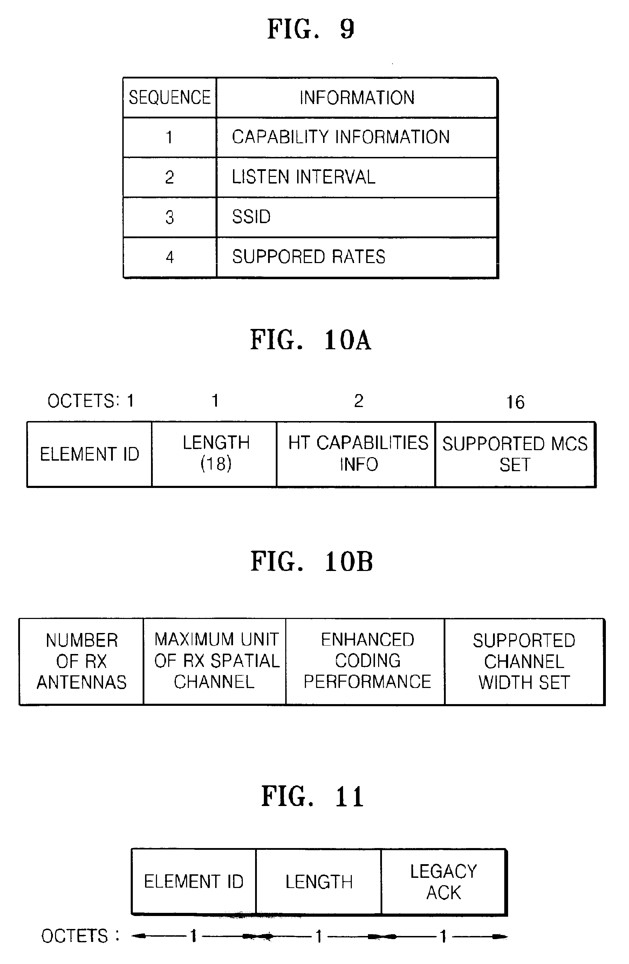

FIG. 9 illustrates an example of performance information that a legacy station reports when associating itself with the infrastructure BSS or joining the IBSS. The legacy station reports its performance information to an AP when associating itself with the infrastructure BSS or to an IBSS management station when joining the IBSS. The performance information illustrated in FIG. 9 is merely an example and different information are reported in different embodiments. Based on this information, the AP or the IBSS management station can identify what kinds of stations exist on the WLAN.

FIGS. 10A and 10B illustrate examples of performance information that an HT station reports when associating itself with the infrastructure BSS or joining the IBSS. The HT station reports its performance information to the AP when associating itself with the infrastructure BSS or to the IBSS management station when joining the IBSS. The performance information illustrated in FIGS. 10A and 10B are merely examples and different information are reported in different embodiments. Based on this information, the AP or the IBSS management station can identify what kinds of stations exist on the wireless LAN.

FIG. 11 illustrates information of an ACK frame to be transmitted to a corresponding station on a WLAN via a beacon or a probe response. After an ACK frame for acknowledging the receipt of a transmission frame on the wireless LAN is determined, an AP or an IBSS management station includes information of the determined ACK frame shown in FIG. 11 in a beacon or a probe response and transmits the beacon or the probe response to a corresponding station.

A legacy ACK field illustrated in FIG. 11 has 'legacy ACK' or 'no preference' as it value. Here, the value of 'legacy ACK' denotes that an ACK frame in the legacy format is designated as an ACK frame to be used in a wireless LAN environment. The value of 'no preference' denotes that no particular ACK frame is designated. If the 'legacy AC K' field has the value of 'legacy ACK,' stations that receive the legacy ACK field containing the 'legacy ACK' value will use the ACK frame in the legacy format when transmitting and receiving frames.

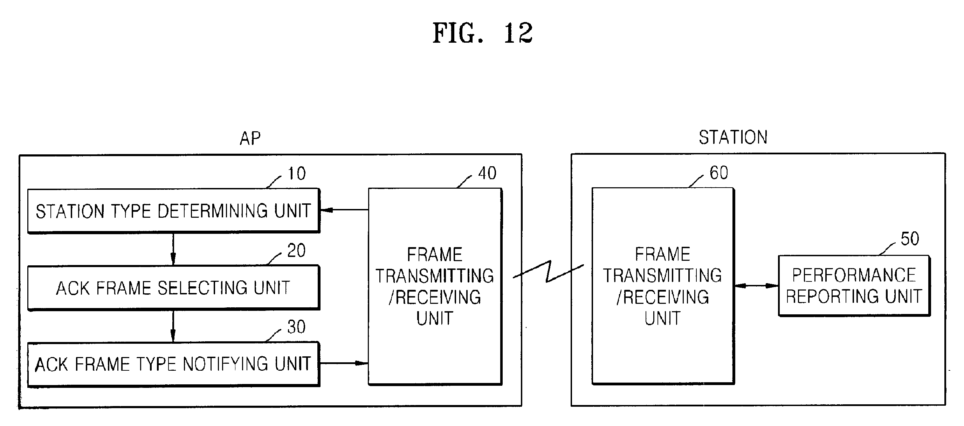

FIG. 12 is a schematic block diagram of an infrastructure BSS according to the present invention. The infrastructure BSS includes an AP and a plurality of stations. The AP includes a station type determining unit 10, an ACK frame selecting unit 20, an ACK frame type notifying unit 30, and a frame transmitting/receiving unit 40. Each of the stations includes a performance reporting unit 50 and a frame transmitting/ receiving unit 60. The number of stations varies in different embodiments.

The station type determining unit 10 determines the types of stations in the infrastructure BSS. The ACK frame selecting unit 20 determines the format of an ACK frame for acknowledging the receipt of a transmission frame in the infrastructure BSS as an HT format or a legacy format according to the result of determination made by the station type determining unit 10.

The ACK frame type notifying unit 30 notifies a corresponding station of the ACK frame determined by the ACK frame selecting unit 20.

The performance reporting unit 50 reports performance information of HT or legacy stations to the AP.

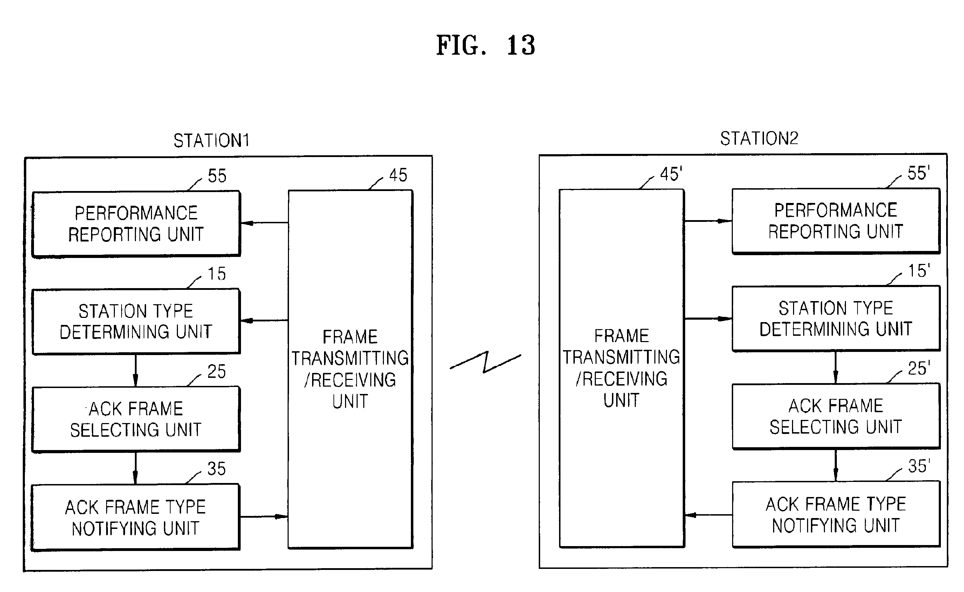

FIG. 13 is a schematic block diagram of an IBSS according to the present invention. The IBSS includes a first station 1 and a second station 2, which respectively include station type determining units 15 and 15', ACK frame selecting units 25 and 25', ACK frame type notifying units 35 and 35', frame transmitting/receiving units 45 and 45', and performance reporting units 55 and 55'. In another exemplary embodiment, the number of stations are different. Since the station type determining units 15 and 15', the ACK frame selecting units 25 and 25', the ACK frame type notifying units 35 and 35', the frame transmitting/receiving units 45 and 45', and the performance reporting units 55 and 55' perform the same functions as elements of FIG. 12, their descriptions will be omitted.

Unlike the infrastructure BSS of FIG. 12, the infrastructure BSS of FIG. 13 does not have a separate AP. A station that manages stations in the IBSS serves as the AP and is randomly selected.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of determining an acknowledgement ACK frame for acknowledging a receipt of a transmission frame on a wireless local area network having at least one of a high throughput station and a legacy station with different data transmission capabilities, the method comprising:
determining a type of at least one of the high throughput station and the legacy station on the wireless local area network (S200, S210);
determining the ACK frame for acknowledging the receipt of the transmission frame on the wireless local area network according to the determined type of the at least one station (S300, S310); and
notifying the at least one station of the determined ACK frame (S400, S410),
wherein, in the determining the ACK frame:
if only high throughput stations exist on the wireless local area network, the ACK frame uses a high throughput format;
if only legacy stations exist on the wireless local area network, the ACK frame uses a legacy format; or
if the high throughput station and the legacy station coexist on the wireless local area network, the high throughput format and the legacy format are compared to decide a format of the ACK frame.

2. The method of claim 1, wherein the wireless local area network is an infrastructure basic service set or an independent basic service set.

3. The method of claim 2, wherein, if the wireless local area network is the infrastructure basic service set, an access point determines the type of the at least one of the high throughput station and the legacy station in the infrastructure basic service set.

4. The method of claim 2, wherein, if the wireless local area network is the independent basic service set, an independent basic service set management station determines the type of the at least one of the high throughput station and the legacy station in the independent basic service set.

5. The method of claim 1, wherein, if it is determined that the high throughput format is more advantageous than the legacy format as a result of comparison, the ACK frame uses the high throughput format.

6. The method of claim 3, wherein the determining the type of the at least one of the high throughput station and the legacy station on the wireless local area network comprises:
reporting performance information of each of the at least one of the high throughput station and legacy station to the access point when each of the at least one of the high throughput station and legacy station associates itself with the wireless local area network; and
determining the type of the at least one of the high throughput station and legacy station on the wireless local area network based on the performance information of each of the at least one of the high throughput station and legacy station.

7. The method of claim 4, wherein the determining the type of the at least one of the high throughput station and the legacy station on the wireless local area network comprises:
reporting performance information of each of the at least one of the high throughput station and the legacy station to the independent basic service set management station when each of the at least one of the high throughput station and the legacy station joins the wireless local area network; and
determining the types of stations on the wireless local area network based on the performance information of each of the at least one of the high throughput station and the legacy station.

8. The method of claim 3, wherein the access point notifies the at least one of the high throughput station and the legacy station on the wireless local area network of the determined ACK frame via a beacon.

9. The method of claim 3, wherein, if the at least one of the high throughput station and the legacy station on the wireless local area network requests information regarding the determined ACK frame, the access point notifies the at least one of the high throughput station and the legacy station of the information regarding the ACK frame via a probe response.

10. The method of claim 4, wherein the independent basic service set management station notifies the at least one of the high throughput station and the legacy station of the determined ACK frame via a beacon.

11. The method of claim 8 or 10, wherein the beacon comprises information regarding the determined ACK frame.

12. The method of claim 4, wherein, if the at least one of the high throughput station and the legacy station on the wireless local area network requests information regarding the determined ACK frame, the independent basic service set notifies the at least one of the high throughput station and the legacy station of the ACK frame through a probe response.

13. The method of claim 9 or 12, wherein the probe response comprises the information regarding the determined ACK frame.

14. The method of claim 11 or 13, wherein the information regarding the determined ACK frame comprises a value indicating that the determined ACK frame is in a legacy format or a value indicating that no particular format is designated.

15. The method of claim 1, wherein the high throughput station comprises a system that uses multiple-input-multiple-output technology.

16. The method of claim 1, wherein the high throughput station comprises a system that uses channel bonding.

17. The method of claim 1, wherein the legacy station comprises a system that meets at least one of the IEEE 802.11 a/b/g standards.

18. An access point of a basic service set having at least one of a high throughput station and a legacy station with different data transmission capabilities, the access point comprising:
a determining unit (10) which determines a type of at least one of the high throughput station and the legacy station in the basic service set;
an ACK frame selecting unit (20) which determines an ACK frame for acknowledging a receipt of a transmission frame in the basic service set according to the determined type of the at least one station; and
an ACK frame type notifying unit (30) which notifies the at least one station of the ACK frame determined by the ACK frame selecting unit, wherein:
if only high throughput stations exist in the basic service set, the ACK frame selecting unit designates a high throughput format as a format of the ACK frame;
if only legacy stations exist in the basic service set, the ACK frame selecting unit designates a legacy format as a format of the ACK frame; or
if the high throughput station and the legacy station coexist in the basic service set, the high throughput format and the legacy format are compared to decide a format of the ACK frame.

19. An independent basic service set management station of an independent basic service set having at least one of a high throughput station and a legacy station with different data transmission capabilities, the management station comprising:
a determining unit (15) which determines a type of at least one of the high throughput station and the legacy station in the independent basic service set;
an acknowledgement ACK frame selecting unit (25) which determines an ACK frame for acknowledging a receipt of a transmission frame in the independent basic service set according to the determined type of the at least one station; and
an ACK frame type notifying unit (35) which notifies the at least one station of the ACK frame determined by the ACK frame selecting unit, wherein:
if only high throughput stations exist in the basic service set, the ACK frame selecting unit designates a high throughput format as a format of the ACK frame;
if only legacy stations exist in the basic service set, the ACK frame selecting unit designates a legacy format as a format of the ACK frame; or
if the high throughput station and the legacy station coexist in the basic service set, the high throughput format and the legacy format are compared to decide a format of the ACK frame.

20. An access point according to claim 18 or a management station according to claim 19, wherein, if it is determined that the high throughput format is more advantageous than the legacy format as a result of comparison, the ACK frame uses the high throughput format.

21. An access point according to claim 18 or a management station according to claim 19, wherein the ACK frame type notifying unit notifies the at least one of the high throughput station and the legacy station of the determined ACK frame via a beacon.

22. An access point according to claim 21 or a management station according to claim 21, wherein the beacon comprises information regarding the determined ACK frame.

23. An access point according to claim 18 or a management station according to claim 19, wherein, if the at least one of the high throughput station and the legacy station in the basic service set requests information regarding the determined ACK frame, the ACK frame type notifying unit notifies the at least one of the high throughput station and the legacy station of the ACK frame via a probe response.

24. An access point according to claim 22 or a management station according to claim 25, wherein the probe response comprises the information regarding the determined ACK frame.

25. An access point according to claim 22 or 24 or a management station according to claim 22 or 24, wherein the information regarding the determined ACK frame comprises a value indicating that the determined ACK frame is in a legacy format or a value indicating that no particular format is designated.

26. An infrastructure basic service set, the infrastructure basic service set comprising:
an access point according to claim 18; and
at least one station comprising a unit for reporting performance information to the access point and a unit for receiving the ACK frame from the ACK frame type notifying unit included in the access point.

27. The infrastructure basic service set of claim 26, wherein at least one of a high throughput station and a legacy station with different data transmission capabilities exist in the infrastructure basic service set, and the determining unit determines a type of the at least one of the high throughput station and the legacy station.

28. An independent basic service set, the independent basic service set comprising:
an independent basic service set management station according to claim 19; and
at least one station comprising a unit for reporting performance information to the independent basic service set management station and a unit for receiving the ACK frame from the ACK frame type notifying unit included in the independent basic service set management station.

29. A computer-readable recording medium on which a program for executing the method of claim 1 is recorded.

30. A method of determining an acknowledgement ACK frame for acknowledging a receipt of a transmission frame on a wireless local area network having at least one of a high throughput station and a legacy station with different data transmission capabilities, the method comprising:
determining a type of at least one of the high throughput station and the legacy station on the wireless local area network (S200, S210);
determining the ACK frame for acknowledging the receipt of the transmission frame on the wireless local area network according to the determined type of the at least one station (S300, S310); and
notifying the at least one station of the determined ACK frame (S400, S410), wherein, in the determining the ACK frame:
if only high throughput stations exist on the wireless local area network, the ACK frame uses a high throughput format;
if only legacy stations exist on the wireless local area network, the ACK frame uses a legacy format; or
if the high throughput station and the legacy station coexist on the wireless local area network, the ACK frame uses the legacy format.

31. An access point of a basic service set having at least one of a high throughput station and a legacy station with different data transmission capabilities, the access point comprising:
a determining unit (10) which determines a type of at least one of the high throughput station and the legacy station in the basic service set;
an ACK frame selecting unit (20) which determines an ACK frame for acknowledging a receipt of a transmission frame in the basic service set according to the determined type of the at least one station; and
an ACK frame type notifying unit (30) which notifies the at least one station of the ACK frame determined by the ACK frame selecting unit, wherein:
if only high throughput stations exist in the basic service set, the ACK frame selecting unit designates a high throughput format as a format of the ACK frame;
if only legacy stations exist in the basic service set, the ACK frame selecting unit designates a legacy format as a format of the ACK frame; or
if the high throughput station and the legacy station coexist in the basic service set, the ACK frame selecting unit designates the legacy format as a format of the ACK frame.

32. An independent basic service set management station of an independent basic service set having at least one of a high throughput station and a legacy station with different data transmission capabilities, the management station comprising:
a determining unit (15) which determines a type of at least one of the high throughput station and the legacy station in the independent basic service set;
an acknowledgement ACK frame selecting unit (25) which determines an ACK frame for acknowledging a receipt of a transmission frame in the independent basic service set according to the determined type of the at least one station; and
an ACK frame type notifying unit (35) which notifies the at least one station of the ACK frame determined by the ACK frame selecting unit, wherein:
if only high throughput stations exist in the basic service set, the ACK frame selecting unit designates a high throughput format as a format of the ACK frame;
if only legacy stations exist in the basic service set, the ACK frame selecting unit designates a legacy format as a format of the ACK frame; or
if the high throughput station and the legacy station coexist in the basic service set, the ACK frame selecting unit designates the legacy format as a format of the ACK frame.

## Patentansprüche

1. Verfahren zum Ermitteln eines Quittierungs-(ACK) Rahmens zum Quittieren des Empfangs eines Übertragungsrahmens auf einem drahtlosen Lokalnetz mit wenigstens einer Hochdurchsatzstation und einer Legacy-Station mit unterschiedlichen Datenübertragungsfähigkeiten, wobei das Verfahren Folgendes beinhaltet:
Ermitteln eines Typs von wenigstens einer aus Hochdurchsatzstation und/oder Legacy-Station auf dem drahtlosen Lokalnetz (S200, S210);
Ermitteln des ACK-Rahmens zum Quittieren des Empfangs des Übertragungsrahmens auf dem drahtlosen Lokalnetz gemäß den ermittelten Typ der wenigstens einen Station (S300, S310); und
Avisieren der wenigstens einen Station über den ermittelten ACK-Rahmen (S400, S410), wobei beim Ermitteln des ACK-Rahmens:
wenn nur Hochdurchsatzstationen auf dem drahtlosen Lokalnetz existieren, der ACK-Rahmen ein Hochdurchsatzformat benutzt;
wenn nur Legacy-Stationen auf dem drahtlosen Lokalnetz existieren, der ACK-Rahmen ein Legacy-Format benutzt; oder
wenn die Hochdurchsatzstation und die Legacy-Station auf dem drahtlosen Lokalnetz koexistieren, das Hochdurchsatzformat und das Legacy-Format verglichen werden, um ein Format des ACK-Rahmens zu beschließen.

2. Verfahren nach Anspruch 1, wobei das drahtlose Lokalnetz ein Infrastruktur-Grunddienstesatz oder ein unabhängiger Grunddienstesatz ist.

3. Verfahren nach Anspruch 2, wobei, wenn das drahtlose Lokalnetz der Infrastruktur-Grunddienstesatz ist, ein Zugangspunkt den Typ der wenigstens einen aus Hochdurchsatzstation und/oder Legacy-Station in dem Infrastruktur-Grunddienstesatz ermittelt.

4. Verfahren nach Anspruch 2, wobei, wenn das drahtlose Lokalnetz der unabhängige Grunddienstesatz ist, eine unabhängige Grunddienstesatz-Managementstation den Typ der wenigstens einen aus Hochdurchsatzstation und/oder Legacy-Station in dem unabhängigen Grunddienstesatz ermittelt.

5. Verfahren nach Anspruch 1, wobei, wenn infolge des Vergleichs festgestellt wird, dass das Hochdurchsatzformat vorteilhafter ist als das Legacy-Format, der ACK-Rahmen das Hochdurchsatzformat benutzt.

6. Verfahren nach Anspruch 3, wobei das Ermitteln des Typs der wenigstens einen aus Hochdurchsatzstation und/oder Legacy-Station auf dem drahtlosen Lokalnetz Folgendes beinhaltet:
Melden von Leistungsinformationen über jede der wenigstens einen aus Hochdurchsatzstation und/oder Legacy-Station an den Zugangspunkt, wenn sich jede der wenigstens einen aus Hochdurchsatzstation und/oder Legacy-Station mit dem drahtlosen Lokalnetz assoziiert;
Ermitteln des Typs der wenigstens einen aus Hochdurchsatzstation und/oder Legacy-Station auf dem drahtlosen Lokalnetz auf der Basis der Leistungsinformationen über jede der wenigstens einen aus Hochdurchsatzstation und/oder Legacy-Station.

7. Verfahren nach Anspruch 4, wobei das Ermitteln des Typs der wenigstens einen aus Hochdurchsatzstation und/oder Legacy-Station auf dem drahtlosen Lokalnetz Folgendes beinhaltet:
Melden von Leistungsinformationen über jede der wenigstens einen aus Hochdurchsatzstation und/oder Legacy-Station an die unabhängige Grunddienstesatz-Managementstation, wenn sich jede der wenigstens einen aus Hochdurchsatzstation und/oder Legacy-Station am drahtlosen Lokalnetz anschaltet; und
Ermitteln der Typen von Stationen auf dem drahtlosen Lokalnetz auf der Basis der Leistungsinformationen über jede der wenigstens einen aus Hochdurchsatzstation und/oder Legacy-Station.

8. Verfahren nach Anspruch 3, wobei der Zugangspunkt die wenigstens eine aus Hochdurchsatzstation und Legacy-Station auf dem drahtlosen Lokalnetz über eine Bake über den ermittelten ACK-Rahmen avisiert.

9. Verfahren nach Anspruch 3, wobei, wenn die wenigstens eine aus Hochdurchsatzstation und/oder Legacy-Station auf dem drahtlosen Lokalnetz Informationen über den ermittelten ACK-Rahmen anfordert, der Zugangspunkt die wenigstens eine aus Hochdurchsatzstation und/oder Legacy-Station durch eine Probe-Response über die Informationen in Bezug auf den ACK-Rahmen avisiert.

10. Verfahren nach Anspruch 4, wobei die unabhängige Grunddienstesatz-Managementstation die wenigstens eine aus Hochdurchsatzstation und Legacy-Station über eine Bake über den ermittelten ACK-Rahmen avisiert.

11. Verfahren nach Anspruch 8 oder 10, wobei die Bake Informationen über den ermittelten ACK-Rahmen enthält.

12. Verfahren nach Anspruch 4, wobei, wenn die wenigstens eine aus Hochdurchsatzstation und Legacy-Station auf dem drahtlosen Lokalnetz Informationen über den ermittelten ACK-Rahmen anfordert, der unabhängige Grunddienstesatz die wenigstens eine aus Hochdurchsatzstation und/oder Legacy-Station durch eine Probe-Response über den ACK-Rahmen avisiert.

13. Verfahren nach Anspruch 9 oder 12, wobei die Probe-Response die Informationen über den ermittelten ACK-Rahmen enthält.

14. Verfahren nach Anspruch 11 oder 13, wobei die Informationen über den ermittelten ACK-Rahmen einen Wert enthalten, der anzeigt, dass der ermittelte ACK-Rahmen in einem Legacy-Format ist, oder einen Wert, der anzeigt, dass kein bestimmtes Format designiert ist.

15. Verfahren nach Anspruch 1, wobei die Hochdurchsatzstation ein System beinhaltet, das Multiple-Input-Multiple-Output-Technologie benutzt.

16. Verfahren nach Anspruch 1, wobei die Hochdurchsatzstation ein System beinhaltet, das Channel-Bonding benutzt.

17. Verfahren nach Anspruch 1, wobei die Legacy-Station ein System beinhaltet, das wenigstens eine der IEEE 802.11 a/b/g Normen erfüllt.

18. Zugangspunkt eines Grunddienstesatzes mit wenigstens einer aus Hochdurchsatzstation und/oder Legacy-Station mit unterschiedlichen Datenübertragungsfähigkeiten, wobei der Zugangspunkt Folgendes umfasst:
eine Ermittlungseinheit (10), die einen Typ von wenigstens einer aus Hochdurchsatzstation und/oder Legacy-Station in dem Grunddienstesatz ermittelt;
eine ACK-Rahmenauswahleinheit (20), die einen ACK-Rahmen zum Quittieren des Empfangs eines Übertragungsrahmens in dem Grunddienstesatz gemäß dem ermittelten Typ der wenigstens einen Station ermittelt; und
eine ACK-Rahmentyp-Avisiereinheit (30), die die wenigstens eine Station über den von der ACK-Rahmenauswahleinheit ermittelten ACK-Rahmen avisiert, wobei:
wenn nur Hochdurchsatzstationen im Grunddienstesatz existieren, die ACK-Rahmenauswahleinheit ein Hochdurchsatzformat als Format des ACK-Rahmens designiert;
wenn nur Legacy-Stationen im Grunddienstesatz existieren, die ACK-Rahmenauswahleinheit ein Legacy-Format als Format des ACK-Rahmens designiert; oder
wenn die Hochdurchsatzstation und die Legacy-Station im Grunddienstesatz koexistieren, das Hochdurchsatzformat und das Legacy-Format verglichen werden, um ein Format des ACK-Rahmens zu beschließen.

19. Unabhängige Grunddienstesatz-Managementstation eines unabhängigen Grunddienstesatzes mit wenigstens einer aus Hochdurchsatzstation und/oder Legacy-Station mit unterschiedlichen Datenübertragungsfähigkeiten, wobei die Managementstation Folgendes umfasst:
eine Ermittlungseinheit (15), die einen Typ von wenigstens einer aus Hochdurchsatzstation und/oder Legacy-Station in dem unabhängigen Grunddienstesatz ermittelt;
eine Quittierungs-(ACK)-Rahmenauswahleinheit (25), die einen ACK-Rahmen zum Quittieren des Empfangs eines Übertragungsrahmens in dem unabhängigen Grunddienstesatz gemäß dem bestimmten Typ der wenigstens einen Station ermittelt; und
eine ACK-Rahmentyp-Avisiereinheit (35), die die wenigstens eine Station über den von der ACK-Rahmenauswahleinheit ermittelten ACK-Rahmen avisiert, wobei:
wenn nur Hochdurchsatzstationen im Grunddienstesatz existieren, die ACK-Rahmenauswahleinheit ein Hochdurchsatzformat als Format des ACK-Rahmens designiert;
wenn nur Legacy-Stationen im Grunddienstesatz existieren, die ACK-Rahmenauswahleinheit ein Legacy-Format als Format des ACK-Rahmens designiert; oder
wenn die Hochdurchsatzstation und die Legacy-Station im Grunddienstesatz koexistieren, das Hochdurchsatzformat und das Legacy-Format verglichen werden, um ein Format des den ACK-Rahmens zu beschließen.

20. Zugangspunkt nach Anspruch 18 oder Managementstation nach Anspruch 19, wobei, wenn infolge des Vergleichs festgestellt wird, dass das Hochdurchsatzformat vorteilhafter ist als das Legacy-Format, der ACK-Rahmen das Hochdurchsatzformat benutzt.

21. Zugangspunkt nach Anspruch 18 oder Managementstation nach Anspruch 19, wobei die ACK-Rahmentyp-Avisiereinheit die wenigstens eine aus Hochdurchsatzstation und/oder Legacy-Station über eine Bake über den ermittelten ACK-Rahmen avisiert.

22. Zugangspunkt nach Anspruch 21 oder Managementstation nach Anspruch 21, wobei die Bake Informationen über den ermittelten ACK-Rahmen beinhaltet.

23. Zugangspunkt nach Anspruch 18 oder Managementstation nach Anspruch 19, wobei, wenn die wenigstens eine aus Hochdurchsatzstation und/oder Legacy-Station im Grunddienstesatz Informationen über den ermittelten ACK-Rahmen anfordert, die ACK-Rahmentyp-Avisiereinheit die wenigstens eine aus Hochdurchsatzstation und/oder Legacy-Station durch eine Probe-Response über den ACK-Rahmen avisiert.

24. Zugangspunkt nach Anspruch 22 oder Managementstation nach Anspruch 25, wobei die Probe-Response die Informationen über den ermittelten ACK-Rahmen enthält.

25. Zugangspunkt nach Anspruch 22 oder 24 oder Managementstation nach Anspruch 22 oder 24, wobei die Informationen über den ermittelten ACK-Rahmen einen Wert enthalten, der anzeigt, dass der ermittelte ACK-Rahmen in einem Legacy-Format ist, oder einen Wert, der anzeigt, dass kein bestimmtes Format designiert ist.

26. Infrastruktur-Grunddienstesatz, wobei der Infrastruktur-Grunddienstesatz Folgendes umfasst:
einen Zugangspunkt nach Anspruch 18; und
wenigstens eine Station, die eine Einheit zum Melden von Leistungsinformationen an den Zugangspunkt und eine Einheit zum Empfangen des ACK-Rahmens von der im Zugangspunkt enthaltenen ACK-Rahmentyp-Avisiereinheit umfasst.

27. Infrastruktur-Grunddienstesatz nach Anspruch 26, wobei wenigstens eine aus Hochdurchsatzstation und/oder Legacy-Station mit unterschiedlichen Datenübertragungsfähigkeiten im Infrastruktur-Grunddienstesatz existiert und die Ermittlungseinheit einen Typ der wenigstens einen aus Hochdurchsatzstation und/oder Legacy-Station ermittelt.

28. Unabhängiger Grunddienstesatz, wobei der unabhängige Grunddienstesatz Folgendes beinhaltet:
eine unabhängige Grunddienstesatz-Managementstation nach Anspruch 19; und
wenigstens eine Station, die eine Einheit zum Melden von Leistungsinformationen an die unabhängige Grunddienstesatz-Managementstation sowie eine Einheit zum Empfangen des ACK-Rahmens von der in der unabhängigen Grunddienstesatz-Managementstation enthaltenen ACK-Rahmentyp-Avisiereinheit umfasst.

29. Computerlesbares Aufzeichnungsmedium, auf dem ein Programm zum Ausführen des Verfahrens nach Anspruch 1 aufgezeichnet ist.

30. Verfahren zum Ermitteln eines Quittierungs-(ACK)-Rahmens zum Quittieren des Empfangs eines Übertragungsrahmens auf einem drahtlosen Lokalnetz mit wenigstens einer aus Hochdurchsatzstation und/oder Legacy-Station mit unterschiedlichen Datenübertragungsfähigkeiten, wobei das Verfahren Folgendes beinhaltet:
Ermitteln eines Typs von wenigstens einer aus Hochdurchsatzstation und/oder Legacy-Station auf dem drahtlosen Lokalnetz (S200, S210);
Ermitteln des ACK-Rahmens zum Quittieren des Empfangs des Übertragungsrahmens auf dem drahtlosen Lokalnetz gemäß dem ermittelten Typ der wenigstens einen Station (S300, S310); und
Avisieren der wenigstens einen Station über den ermittelten ACK-Rahmens (S400, S410), wobei beim Ermitteln des ACK-Rahmens:
wenn nur Hochdurchsatzstationen auf dem drahtlosen Lokalnetz existieren, der ACK-Rahmen ein Hochdurchsatzformat benutzt;
wenn nur Legacy-Stationen auf dem drahtlosen Lokalnetz existieren, der ACK-Rahmen ein Legacy-Format benutzt; oder
wenn die Hochdurchsatzstation und die Legacy-Station auf dem drahtlosen Lokalnetz koexistieren, der ACK-Rahmen das Legacy-Format benutzt.

31. Zugangspunkt eines Grunddienstesatzes mit wenigstens einer aus Hochdurchsatzstation und/oder Legacy-Station mit unterschiedlichen Datenübertragungsfähigkeiten, wobei der Zugangspunkt Folgendes umfasst:
eine Ermittlungseinheit (10), die einen Typ von wenigstens einer aus Hochdurchsatzstation und/oder Legacy-Station im Grunddienstesatz ermittelt;
eine ACK-Rahmenauswahleinheit (20), die einen ACK-Rahmen zum Quittieren des Empfangs eines Übertragungsrahmens im Grunddienstesatz gemäß dem ermittelten Typ der wenigstens einen Station ermittelt; und
eine ACK-Rahmentyp-Avisiereinheit (30), die die wenigstens eine Station über den von der ACK-Rahmenauswahleinheit ermittelten ACK-Rahmen avisiert, wobei:
wenn nur Hochdurchsatzstationen im Grunddienstesatz existieren, die ACK-Rahmenauswahleinheit ein Hochdurchsatzformat als Format des ACK-Rahmens designiert;
wenn nur Legacy-Stationen im Grunddienstesatz existieren, die ACK-Rahmenauswahleinheit ein Legacy-Format als Format des ACK-Rahmens designiert; oder
wenn die Hochdurchsatzstation und die Legacy-Station im Grunddienstesatz koexistieren, die ACK-Rahmenauswahleinheit das Legacy-Format als Format des ACK-Rahmens designiert.

32. Unabhängige Grunddienstesatz-Managementstation eines unabhängigen Grunddienstesatzes mit wenigstens einer aus Hochdurchsatzstation und/oder Legacy-Station mit unterschiedlichen Datenübertragungsfähigkeiten, wobei die Managementstation Folgendes umfasst:
eine Ermittlungseinheit (15), die einen Typ von wenigstens einer aus Hochdurchsatzstation und/oder Legacy-Station in dem unabhängigen Grunddienstesatz ermittelt;
eine Quittierungs-(ACK)-Rahmenauswahleinheit (25), die einen ACK-Rahmen zum Quittieren des Empfangs eines Übertragungsrahmens in dem unabhängigen Gruddienstesatz gemäß dem ermittelten Typ der wenigstens einen Station ermittelt; und
eine ACK-Rahmentyp-Avisiereinheit (35), die die wenigstens eine Station über den von der ACK-Rahmenauswahleinheit ermittelten ACK-Rahmen avisiert, wobei:
wenn nur Hochdurchsatzstationen im Grunddienstesatz existieren, die ACK-Rahmenauswahleinheit ein Hochdurchsatzformat als Format des ACK-Rahmens designiert;
wenn nur Legacy-Stationen im Grunddienstesatz existieren, die ACK-Rahmenauswahleinheit ein Legacy-Format als Format des ACK-Rahmens designiert; oder
wenn die Hochdurchsatzstation und die Legacy-Station im Grunddienstesatz koexistieren, die ACK-Rahmenauswahleinheit das Legacy-Format als Format des ACK-Rahmens designiert.

## Revendications

1. Procédé servant à déterminer une trame ACK d'acquittement pour accuser réception d'une trame de transmission sur un réseau local sans fil possédant au moins un des postes suivants, à savoir une station à haut débit et une station patrimoniale, avec différentes capacités de transmission de données, le procédé comprenant les opérations consistant à :
déterminer un type d'au moins un des postes suivants, à savoir la station à haut débit et la station patrimoniale, sur le réseau local sans fil (S200, 5210) ;
déterminer la trame ACK pour accuser réception de la trame de transmission sur le réseau local sans fil, conformément au type déterminé de ladite au moins une station (S300, S310) ; et
notifier ladite au moins une station au sujet de la trame ACK ayant été déterminée (S400, S410),
cas dans lequel, lors de la détermination de la trame ACK :
si seules des stations à haut débit existent sur le réseau local sans fil, la trame ACK va utiliser un format à haut débit ;
si seules des stations patrimoniales existent sur le réseau local sans fil, la trame ACK va utiliser un format patrimonial ; ou
si la station à haut débit et la station patrimoniale coexistent sur le réseau local sans fil, le format à haut débit et le format patrimonial feront alors l'objet d'une comparaison afin de décider un format pour la trame ACK.

2. Procédé selon la revendication 1, le réseau local sans fil étant un ensemble de services de base d'infrastructure ou un ensemble de services de base indépendants.

3. Procédé selon la revendication 2, si le réseau local sans fil est l'ensemble de services de base d'infrastructure, un point d'accès déterminant alors le type dudit au moins un des postes suivants, à savoir la station à haut débit et la station patrimoniale, dans l'ensemble de services de base d'infrastructure.

4. Procédé selon la revendication 2, si le réseau local sans fil est l'ensemble de services de base indépendants, une station de gestion d'un ensemble de services de base indépendants déterminant alors le type dudit au moins un des postes suivants, à savoir la station à haut débit et la station patrimoniale, dans l'ensemble de services de base indépendants.

5. Procédé selon la revendication 1, s'il a été déterminé que le format à haut débit est plus avantageux que le format patrimonial à la suite de la comparaison, la trame ACK utilisant alors le format à haut débit.

6. Procédé selon la revendication 3, la détermination du type dudit au moins un des postes suivants, à savoir la station à haut débit et la station patrimoniale, sur le réseau local sans fil, comprenant les opérations consistant à :
signaler, au point d'accès, des informations de performance de chacun dudit au moins un des postes suivants, à savoir la station à haut débit et la station patrimoniale, lorsque chacun dudit au moins un des postes suivants, à savoir la station à haut débit et la station patrimoniale, s'associe avec le réseau local sans fil ; et
déterminer le type dudit au moins un des postes suivants, à savoir la station à haut débit et la station patrimoniale, sur le réseau local sans fil, sur la base des informations de performance de chacun dudit au moins un des postes suivants, à savoir la station à haut débit et la station patrimoniale.

7. Procédé selon la revendication 4, la détermination du type dudit au moins un des postes suivants, à savoir la station à haut débit et la station patrimoniale, sur le réseau local sans fil, comprenant les opérations consistant à :
signaler, à la station de gestion d'un ensemble de services de base indépendants, des informations de performance de chacun dudit au moins un des postes suivants, à savoir la station à haut débit et la station patrimoniale, lorsque chacun dudit au moins des postes suivants, à savoir la station à haut débit et la station patrimoniale, rejoint le réseau local sans fil ; et
déterminer les types de stations sur le réseau local sans fil, sur la base des informations de performance de chacun dudit au moins un des postes suivants, à savoir la station à haut débit et la station patrimoniale.

8. Procédé selon la revendication 3, le point d'accès notifiant, par l'intermédiaire d'une balise, ladite au moins une station parmi les suivantes, à savoir la station à haut débit et la station patrimoniale, sur le réseau local sans fil, au sujet de la trame ACK ayant été déterminée.

9. Procédé selon la revendication 3, si ladite au moins une station parmi les suivantes, à savoir la station à haut débit et la station patrimoniale, sur le réseau local sans fil, demande des informations relatives à la trame ACK déterminée, le point d'accès notifiant alors, par l'intermédiaire d'une réponse de capteur, ladite au moins une station parmi les suivantes, à savoir la station à haut débit et la station patrimoniale, les informations relatives à la trame ACK.

10. Procédé selon la revendication 4, la station de gestion d'un ensemble de services de base indépendants notifiant, par l'intermédiaire d'une balise, ladite au moins une station parmi les suivantes, à savoir la station à haut débit et la station patrimoniale, au sujet de la trame ACK ayant été déterminée.

11. Procédé selon la revendication 8 ou 10, la balise comportant des informations relatives à la trame ACK ayant été déterminée.

12. Procédé selon la revendication 4, si ladite au moins une station parmi les suivantes, à savoir la station à haut débit et la station patrimoniale, sur le réseau local sans fil, demande des informations relatives à la trame ACK déterminée, l'ensemble de services de base indépendants notifiant alors, par l'intermédiaire d'une réponse de capteur, ladite au moins une station parmi les suivantes, à savoir la station à haut débit et la station patrimoniale, au sujet de la trame ACK.

13. Procédé selon la revendication 9 ou 12, la réponse de capteur comportant les informations relatives à la trame ACK ayant été déterminée.

14. Procédé selon la revendication 11 ou 13, les informations relatives à la trame ACK déterminée comprenant une valeur qui indique que la trame ACK déterminée se présente sous un format patrimonial ou une valeur qui indique qu'aucun format particulier n'a été désigné.

15. Procédé selon la revendication 1, la station à haut débit comprenant un système qui utilise la technologie à entrées multiples / sorties multiples.

16. Procédé selon la revendication 1, la station à haut débit comprenant un système qui utilise l'agrégation des canaux.

17. Procédé selon la revendication 1, la station patrimoniale comportant un système qui satisfait au moins à l'une des normes suivantes, à savoir IEEE 802.11 a / b / g.

18. Point d'accès d'un ensemble de services de base possédant au moins un des postes suivants, à savoir une station à haut débit et une station patrimoniale, avec différentes capacités de transmission de données, le point d'accès comprenant :
une unité de détermination (10) qui détermine un type d'au moins un des postes suivants, à savoir la station à haut débit et la station patrimoniale, dans l'ensemble de services de base ;
une unité de sélection de trame ACK (20) qui détermine une trame ACK pour accuser réception d'une trame de transmission dans l'ensemble de services de base conformément au type déterminé de ladite au moins une station ; et
une unité de notification du type de trame ACK (30) qui notifie ladite au moins une station au sujet de la trame ACK ayant été déterminée par l'unité de sélection de trame ACK, cas dans lequel :
si seules des stations à haut débit existent dans l'ensemble de services de base, l'unité de sélection de trame ACK va désigner un format à haut débit en tant que format de la trame ACK ;
si seules des stations patrimoniales existent dans l'ensemble de services de base, l'unité de sélection de trame ACK va désigner un format patrimonial en tant que format de la trame ACK ; ou
si la station à haut débit et la station patrimoniale coexistent dans l'ensemble de services de base, le format à haut débit et le format patrimonial feront alors l'objet d'une comparaison afin de décider un format pour la trame ACK.

19. Station de gestion d'un ensemble de services de base indépendants pour un ensemble de services de base indépendants possédant au moins un des postes suivants, à savoir une station à haut débit et une station patrimoniale, avec différentes capacités de transmission de données, la station de gestion comprenant :
une unité de détermination (15) qui détermine un type d'au moins un des postes suivants, à savoir la station à haut débit et la station patrimoniale, dans l'ensemble de services de base indépendants ;
une unité de sélection de trame ACK d'acquittement (25) qui détermine une trame ACK pour accuser réception d'une trame de transmission dans l'ensemble de services de base indépendants conformément au type déterminé de ladite au moins une station ; et
une unité de notification du type de trame ACK (35) qui notifie ladite au moins une station au sujet de la trame ACK ayant été déterminée par l'unité de sélection de trame ACK, cas dans lequel :
si seules des stations à haut débit existent dans l'ensemble de services de base, l'unité de sélection de trame ACK va désigner un format à haut débit en tant que format de la trame ACK ;
si seules des stations patrimoniales existent dans l'ensemble de services de base, l'unité de sélection de trame ACK va désigner un format patrimonial en tant que format de la trame ACK ; ou
si la station à haut débit et la station patrimoniale coexistent dans l'ensemble de services de base, le format à haut débit et le format patrimonial feront alors l'objet d'une comparaison afin de décider un format pour la trame ACK.

20. Point d'accès selon la revendication 18 ou station de gestion selon la revendication 19, s'il a été déterminé que le format à haut débit est plus avantageux que le format patrimonial à la suite de la comparaison, la trame ACK utilisant alors le format à haut débit.

21. Point d'accès selon la revendication 18 ou station de gestion selon la revendication 19, l'unité de notification du type de trame ACK notifiant, par l'intermédiaire d'une balise, ladite au moins une station parmi les suivantes, à savoir la station à haut débit et la station patrimoniale, au sujet de la trame ACK ayant été déterminée.

22. Point d'accès selon la revendication 21 ou station de gestion selon la revendication 21, la balise comportant des informations relatives à la trame ACK ayant été déterminée.

23. Point d'accès selon la revendication 18 ou station de gestion selon la revendication 19, si ladite au moins une station parmi les suivantes, à savoir la station à haut débit et la station patrimoniale, dans l'ensemble de services de base demande des informations relatives à la trame ACK déterminée, l'unité de notification du type de trame ACK notifiant alors, par l'intermédiaire d'une réponse de capteur, ladite au moins une station parmi les suivantes, à savoir la station à haut débit et la station patrimoniale, au sujet de la trame ACK.

24. Point d'accès selon la revendication 22 ou station de gestion selon la revendication 25, la réponse de capteur comportant les informations relatives à la trame ACK ayant été déterminée.

25. Point d'accès selon la revendication 22 ou 24, ou station de gestion selon la revendication 22 ou 24, les informations relatives à la trame ACK déterminée comprenant une valeur qui indique que la trame ACK déterminée se présente sous un format patrimonial ou une valeur qui indique qu'aucun format particulier n'a été désigné.

26. Ensemble de services de base d'infrastructure, l'ensemble de services de base d'infrastructure comprenant :
un point d'accès selon la revendication 18 ; et
au moins une station comportant une unité pour signaler des informations de performance au point d'accès et une unité pour recevoir la trame ACK en provenance de l'unité de notification du type de trame ACK abritée dans le point d'accès.

27. Ensemble de services de base d'infrastructure selon la revendication 26, au moins un des postes suivants, à savoir une station à haut débit et une station patrimoniale, avec différentes capacités de transmission de données, existant dans l'ensemble de services de base d'infrastructure, et l'unité de détermination déterminant un type dudit au moins un des postes suivants, à savoir la station à haut débit et la station patrimoniale.

28. Ensemble de services de base indépendants, l'ensemble de services de base indépendants comprenant :
une station de gestion d'un ensemble de services de base indépendants selon la revendication 19 ; et
au moins une station englobant une unité pour signaler des informations de performance à la station de gestion d'un ensemble de services de base indépendants, ainsi qu'une unité pour recevoir la trame ACK en provenance de l'unité de notification du type de trame ACK abritée dans la station de gestion d'un ensemble de services de base indépendants.

29. Support d'enregistrement lisible par ordinateur sur lequel est enregistré un programme destiné à exécuter le procédé selon la revendication 1.

30. Procédé servant à déterminer une trame ACK d'acquittement pour accuser réception d'une trame de transmission sur un réseau local sans fil possédant au moins un des postes suivants, à savoir une station à haut débit et une station patrimoniale, avec différentes capacités de transmission de données, le procédé comprenant les opérations consistant à :
déterminer un type d'au moins un des postes suivants, à savoir la station à haut débit et la station patrimoniale, sur le réseau local sans fil (S200, S210) ;
déterminer la trame ACK pour accuser réception de la trame de transmission sur le réseau local sans fil, conformément au type déterminé de ladite au moins une station (S300, S310) ; et
notifier ladite au moins une station au sujet de la trame ACK ayant été déterminée (S400, S410), cas dans lequel, lors de la détermination de la trame ACK :
si seules des stations à haut débit existent sur le réseau local sans fil, la trame ACK va utiliser un format à haut débit ;
si seules des stations patrimoniales existent sur le réseau local sans fil, la trame ACK va utiliser un format patrimonial ; ou
si la station à haut débit et la station patrimoniale coexistent sur le réseau local sans fil, la trame ACK va utiliser le format patrimonial.

31. Point d'accès d'un ensemble de services de base possédant au moins un des postes suivants, à savoir une station à haut débit et une station patrimoniale, avec différentes capacités de transmission de données, le point d'accès comprenant :
une unité de détermination (10) qui détermine un type d'au moins un des postes suivants, à savoir la station à haut débit et la station patrimoniale, dans l'ensemble de services de base ;
une unité de sélection de trame ACK (20) qui détermine une trame ACK pour accuser réception d'une trame de transmission dans l'ensemble de services de base conformément au type déterminé de ladite au moins une station ; et
une unité de notification du type de trame ACK (30) qui notifie ladite au moins une station au sujet de la trame ACK ayant été déterminée par l'unité de sélection de trame ACK, cas dans lequel :
si seules des stations à haut débit existent dans l'ensemble de services de base, l'unité de sélection de trame ACK va désigner un format à haut débit en tant que format de la trame ACK ;
si seules des stations patrimoniales existent dans l'ensemble de services de base, l'unité de sélection de trame ACK va désigner un format patrimonial en tant que format de la trame ACK ; ou
si la station à haut débit et la station patrimoniale coexistent dans l'ensemble de services de base, l'unité de sélection de trame ACK va désigner le format patrimonial en tant que format de la trame ACK.

32. Station de gestion d'un ensemble de services de base indépendants pour un ensemble de services de base indépendants possédant au moins un des postes suivants, à savoir une station à haut débit et une station patrimoniale, avec différentes capacités de transmission de données, la station de gestion comprenant :
une unité de détermination (15) qui détermine un type d'au moins un des postes suivants, à savoir la station à haut débit et la station patrimoniale, dans l'ensemble de services de base indépendants ;
une unité de sélection de trame ACK d'acquittement (25) qui détermine une trame ACK pour accuser réception d'une trame de transmission dans l'ensemble de services de base indépendants conformément au type déterminé de ladite au moins une station ; et
une unité de notification du type de trame ACK (35) qui notifie ladite au moins une station au sujet de la trame ACK ayant été déterminée par l'unité de sélection de trame ACK, cas dans lequel :
si seules des stations à haut débit existent dans l'ensemble de services de base, l'unité de sélection de trame ACK va désigner un format à haut débit en tant que format de la trame ACK ;
si seules des stations patrimoniales existent dans l'ensemble de services de base, l'unité de sélection de trame ACK va désigner un format patrimonial en tant que format de la trame ACK ; ou
si la station à haut débit et la station patrimoniale coexistent dans l'ensemble de services de base, l'unité de sélection de trame ACK va désigner le format patrimonial en tant que format de la trame ACK.
